# EUROPEAN PATENT APPLICATION

(11) **EP 4 180 100 A1**
(43) Date of publication of application: **17.05.2023**
(21) Application number: 21020563.9
(22) Date of filing: 11.11.2021
(51) Int. Cl.: A63G 7/00, A63G 27/00, A63G 5/00, A63G 31/00, A63F 13/211, A63F 13/213, A63F 13/245, A63F 13/25, A63F 13/27, A63F 13/837

(54) **SYSTEM FOR PROVIDING A SINGLE- OR MULTI- PLAYER GAME EXPERIENCE**

(71) Applicant: Playoke GmbH, 1010 Wien (AT)
(72) Inventor: Beyer, Markus, 4600 Schleißheim (AT); Anzengruber, Thomas, 4941 Mehrnbach (AT); Märzendorfer, Thomas, 4501 Neuhofen an der Krems (AT); Teubenbacher, Daniel, 4020 Linz (AT)
(74) Representative: Keschmann, Marc

(57) **Abstract**

A system for providing a single- or multi-player game experience, comprising:
- a display for displaying a target,
- at least one, preferably a plurality of, pointer device(s) for pointing towards the target,
- a real-time local positioning system for detecting the position of each pointer device within a gaming area,
wherein the local positioning system comprises a plurality of stationary radio beacons arranged in the gaming area and wireless tags configured to exchange radio signals with the radio beacons,
wherein a wireless tag is each attached to a pointer device,
wherein the wireless tags each comprise at least one sensor for determining an orientation information representative of the orientation of the pointer device relative to the screen, and

- a control unit receiving the position and the orientation of each pointer device and configured to calculate a pointing position on the display to which the pointer device points.

## Description

The invention refers to a system for providing a single- or multi-player game experience.

Theme or amusement park attractions have become increasingly popular. Amusement park attraction comprise rides, such as fixed rides comprising an audience platform or ride vehicle that is typically situated on a motion base having multiple degrees of freedom. These types of motion bases are also frequently positioned adjacent to one or more screens. A series of images or a motion picture may be displayed on the screen. For added realism and effect, the movement of the motion base can be synchronized with the images displayed on the screen.

The motion base can move the audience platform in several different directions including angular movements, such as roll, pitch and yam, and linear movements, such as heave and surge. The various degrees of freedom can be used to simulate the effect of actually moving in synchronization with the images or the motion picture displayed on the screen.

Other types of amusement park attractions comprise single-or multi-player games that involve shooting on targets with guns or other types of pointer devices. Pointer devices may use a beam of light to point or "shoot" towards a target, that has a light sensor for detecting whether the target has been "hit". However, such pointing systems are not suitable for games that comprise movable targets, since the light sensor would have to be physically moved together with the target. In particular, such pointing system cannot be used in single- or multi-player games, in which the target is a virtual target instead of a physical target, such as a target that is displayed on a screen. It would, e.g., be desirable to provide a shooting game that may be integrated into an amusement ride of the type comprising a screen displaying series of images or a motion picture, that features targets to be hit by the player(s).

Accordingly, there is a need for an improved amusement park attraction having an enhanced experience factor. In particular, it is an object of the instant invention to provide a single- or multi-player gaming experience that increases the players' immersion into a virtual environment by actively involving the player(s).

According to the invention, a system for providing a single- or multi-player game experience comprises:
- a display device for displaying a target,
- at least one, preferably a plurality of, pointer device(s) for pointing towards the target,
- a real-time local positioning system for detecting the position of each pointer device(s) within a gaming area,
   wherein the local positioning system comprises a plurality of stationary radio beacons arranged in the gaming area and wireless tags configured to exchange radio signals with the radio beacons,
   wherein a wireless tag is each attached to a pointer device,
   wherein the wireless tags each comprise at least one sensor for determining an orientation information representative of the orientation of the pointer device relative to the screen, and
- a control unit receiving the position and the orientation of each pointer device and configured to calculate a pointing position on the display device to which the pointer device points.

The at least one pointer device allows the audience to interact with the content displayed on the display device. For example, the pointer device may function as a shooting device and the audience is prompted to target specific targets that are displayed on the display device. Such targets may be movable targets or targets that are stationary with respect to the display device. The pointer device may comprise a triggering element, such as a push button, for the user to trigger a pointing action or a shot once the pointer device has been pointed towards the target. Further, the amusement ride may be configured to determine, whether a shot has hit a target or not and the respective user may be credited with credits for each target that was hit.

The display device may be configured as a passive display device or as an active display device. A passive display device is understood to comprise a display area, on which a target is shown in an invariable way. The target may, e.g., be printed on a surface of the display device. Conversely, an active display device is understood to comprise a display surface, that is able to visualize variable content. For example, the active display device may comprise a projection surface, onto which image may be projected by means of a projector. The projected image may be still or moving image. Alternatively, the active display may be configured as an electronic display to which input information is supplied as an electrical signal. The electronic display may be a LED screen or a LCD screen.

According to the invention, the area or point to which the pointer device is pointed on the display device by a user is determined by a combination of a real-time local positioning system for detecting the position of each pointer device within a gaming area and least one sensor arranged on the pointer device for determining an orientation information representative of the orientation of the pointer. The real-time local positioning system may be configured to determine a three-dimensional position of the pointer device within a three-dimensional coordinate system that is stationary with respect to the display device within the gaming area. The orientation information adds the orientation to said three-dimensional position of the pointer device so that

According to the invention, the real-time local positioning system comprises a reference system that is stationary with respect to the display device and wireless tags that are each attached to a pointer device. The stationary reference system comprises a plurality of stationary radio beacons arranged in the gaming area that are able to exchange radio signals with the wireless tags. Alternatively, optical, such as infrared, or acoustic, such as ultrasound, signals that are exchanged between the wireless tags and the beacons may be used instead of or in addition to radio frequency communication. The local positioning system determine the distance by measuring the time of propagation of pulsed signals between the beacons and the wireless tags. Based on the known positions of the beacons, a position of a wireless tag can be determined using triangulation or trilateration.

According to a preferred embodiment, the display device is a screen and wherein a display system is provided for displaying the target as part of a moving image on the screen. Herein, the target may be displayed as a moving target.

Preferably, the control unit is configured to match the pointing position with the target displayed on the screen and to generate an optical or acoustic signal, when the pointing position matches the target. Said matching may be performed by comparing a known current position of the displayed target within a three-dimensional reference system with the current pointing position and identifying that said positions match, if the current position of the displayed target is positioned within a predetermined distance from or around the current pointing position. In this way, a tolerance range is defined by said predetermined distance so that a position match does not require an exact pointing to the target.

Preferably, the positioning system and the sensor of the wireless tag are configured to provide the position and the orientation of the pointing device at a rate of 20-60 Hz. In this way, a highly responsive gaming experience can be achieved. In order to achieve said rate of 20-60 Hz, the beacons and the wireless tags are sending and/or receiving signals at a rate of at least 20-60 Hz.

In order to increase the reliability of the positioning system, a preferred embodiment provides that the radio beacons and the wireless tags are configured to exchange radio signals by means of ultra wideband technology. Ultra wideband is a radio technology that can use a very low energy level for short-range, high-bandwidth communications over a large portion of the radio spectrum. This allows for the transmission of a large amount of signal energy without interfering with conventional narrowband and carrier wave transmission in the same frequency band.

According to a preferred embodiment of the invention. the at least one sensor for determining an orientation information is an inertial measurement unit comprising at least one of an acceleration sensor, a gyroscope and a magnetometer.

Further, the pointer device may comprise a triggering element for triggering the control unit to calculate a pointing position on the screen to which the pointer device points. The triggering element may formed as a trigger of a gun. In particular, the pointer device is designed as a gun. However, the instant invention is not limited to pointing devices that function as a gun or to pointing devices that are used to shoot at a target. Alternatively, the pointing device may be designed as a magic wand, a camera or a shield that is to be held towards a specific direction.

In order to enhance the gaming experience, the gaming system of the invention further comprises
- a motion base,
- an audience platform mounted to the motion base, wherein the motion base is configured to rotate the audience platform about a central axis, and wherein the motion base is configured to tilt and/or raise and/or lower the audience platform,
- a plurality of seats, each accommodating at least one guest, supported on the audience platform, wherein the seats are arranged in at least one circular row,
wherein the screen is configure as a 360°-screen surrounding the audience platform.

Preferably, the seats in the circular row are arranged such that the guests, when seated, are oriented radially outwardly so that the viewing direction is directly towards the screen.

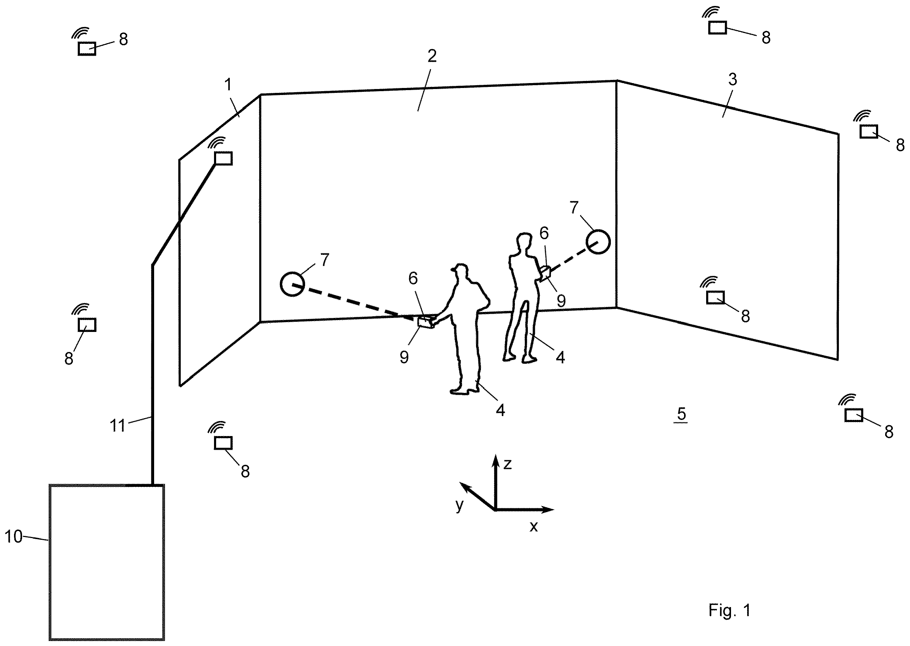

The invention will now be further explained with reference to the drawing, in which Fig. 1 schematically illustrates the system of the invention for providing a single- or multi-player game experience.

In Fig. 1, the system comprises three screens 1, 2 and 3 arranged at an angle relative to each other for electronically displaying moving image. Two players 4 are positioned within the gaming area 5 and carry pointer devices 6. The pointer devices 6 are used to point at a target 7 that is displayed on the screens 1,2,3.

A real-time local positioning system is provided for detecting the position of each pointer device 6 within a coordinate system (x,y,z) that is stationary with respect to the gaming area 5. The local positioning system comprises a plurality of stationary radio beacons 8 that are arranged in the gaming area 5, preferably above the players 4. Further, the local positioning system comprises wireless tags 9 that are fixed to or integrated into the pointer devices 6 and configured to exchange radio signals with the radio beacons 8. The radio beacons 8 and the wireless tags 9 are configured to exchange radio signals by means of ultra wideband technology. Based on the known positions of the beacons 8, the position of the wireless tags 9 can be determined using triangulation or trilateration.

Further, the wireless tags 9 each comprise at least one sensor for determining an orientation information representative of the orientation of the pointer device 6 relative to the screen 1,2,3, wherein the sensor may comprise an inertial measurement unit (IMU).

A control unit 10 is provided for receiving the position and the orientation of each pointer device 6 and configured to calculate a pointing position 7 on the screen 1,2,3, to which the pointer device 6 points. The control unit 10 is connected to one of the radio beacons 8 by means of a wired data connection 11, such as by a USB connection. The other radio beacons 8 do not necessarily need a wired connection to the control unit 10. Rather, the other radio beacons may wirelessly communicate with each other and with the one radio beacon 1 that is connected to the control unit 10 and that relays their data to the control unit 10.

## Claims

1. A system for providing a single- or multi-player game experience, comprising:
- a display for displaying a target,
- at least one, preferably a plurality of, pointer device(s) for pointing towards the target,
- a real-time local positioning system for detecting the position of each pointer device within a gaming area,
wherein the local positioning system comprises a plurality of stationary radio beacons arranged in the gaming area and wireless tags configured to exchange radio signals with the radio beacons,
wherein a wireless tag is each attached to a pointer device,
wherein the wireless tags each comprise at least one sensor for determining an orientation information representative of the orientation of the pointer device relative to the screen, and
- a control unit receiving the position and the orientation of each pointer device and configured to calculate a pointing position on the display to which the pointer device points.

2. System according to claim 1, **characterized in that** the display is a screen and wherein a display system is provided for displaying the target as part of a moving image on the screen.

3. System according to claim 1 or 2, **characterized in that** the control unit is configured to match the pointing position with the target displayed on the screen and to generate an optical or acoustic signal, when the pointing position matches the target.

4. System according to claim 1, 2 or 3, **characterized in that** the positioning system and the sensor of the wireless tag are configured to provide the position and the orientation of the pointer device at a rate of 20-60 Hz.

5. System according to any one of claims 1 to 4, **characterized in that** the radio beacons and the wireless tags are configured to exchange radio signals by means of ultra wideband technology.

6. System according to any one of claims 1 to 5, **characterized in that** the at least one sensor for determining an orientation information is an inertial measurement unit comprising an acceleration sensor, a gyroscope and a magnetometer.

7. System according to any one of claims 1 to 6, **characterized in that** the pointer device comprises a triggering element for triggering the control unit to calculate a pointing position on the screen to which the pointer device points.

8. System according to any one of claims 1 to 7, **characterized in that** the pointer device is designed as a gun.

9. System according to any one of claims 1 to 8, further comprising
- a motion base,
- an audience platform mounted to the motion base, wherein the motion base is configured to rotate the audience platform about a central axis, and wherein the motion base is configured to tilt and/or raise and/or lower the audience platform,
- a plurality of seats, each accommodating at least one guest, supported on the audience platform, wherein the seats are arranged in at least one, preferably in at least one circular row,
wherein the screen is configure as a 360°-screen surrounding the audience platform.

10. System according to claim 9, **characterized in that** the seats in the circular row are arranged such that the guests, when seated, are oriented radially outwardly.
